(19) **Europäisches Patentamt / European Patent Office / Office européen des brevets**

(11) **EP 4 733 810 A1**

(12) **EUROPEAN PATENT APPLICATION**
published in accordance with Art. 153(4) EPC

(43) Date of publication:
29.04.2026 Bulletin 2026/18

(21) Application number: 24870671.5

(22) Date of filing: 24.09.2024

(51) International Patent Classification (IPC):
**G01S 19/07** (2010.01)

(52) Cooperative Patent Classification (CPC):
**G01S 19/07; G05D 1/243; G05D 1/247;
G05D 1/248; G05D 1/43; G05D 1/648;**
G05D 2105/15

(86) International application number:
**PCT/CN2024/120516**

(87) International publication number:
**WO 2025/067127 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.09.2023 CN 202311254798

(71) Applicant: Nanjing Chervon Industry Co., Ltd.
**Nanjing, Jiangsu 211106 (CN)**

(72) Inventors:
• **ZHAO, Dan**
  **Nanjing, Jiangsu 211106 (CN)**
• **LI, Feng**
  **Nanjing, Jiangsu 211106 (CN)**
• **YAO, Surui**
  **Nanjing, Jiangsu 211106 (CN)**
• **SHI, Lingjian**
  **Nanjing, Jiangsu 211106 (CN)**
• **ZHANG, Peng**
  **Nanjing, Jiangsu 211106 (CN)**

(74) Representative: **Sun, Yiming**
**HUASUN Patent- und Rechtsanwälte
Friedrichstraße 33
80801 München (DE)**

(54) **WORKING SYSTEM OF SELF-MOVING DEVICE, AND BASE STATIONS**

(57) Provided are a working system of a self-moving device and a base station. The working system of a self-moving device includes the self-moving device that autonomously travels and performs a work task, a first base station that acquires first satellite observation data, generates first differential data through parsing, and transmits the first differential data to the self-moving device, and a second base station that acquires second satellite observation data, generates second differential data through parsing, and transmits the second differential data to the self-moving device. The self-moving device receives the first differential data from the first base station and the second differential data from the second base station and calculates a difference parameter according to the first differential data and the second differential data, and in a case where the difference parameter meets a corresponding base station offset condition, it is determined that the first base station and/or the second base station deviates from a corresponding initial installation position, and a base station offset alarm is sent.

FIG. 4

## Description

This application claims priority to Chinese Patent Application No. 202311254798.8 filed with the China National Intellectual Property Administration (CNIPA) on Sept. 26, 2023, the disclosure of which is incorporated herein by reference in its entirety.

## TECHNICAL FIELD

The present application relates to the technical field of power tools and, in particular, to a working system of a self-moving device and a base station.

## BACKGROUND

A self-moving device represented by a mower performs a work task such as mowing within a certain working area. Considering that a Global Navigation Satellite System (GNSS) such as a Global Positioning System (GPS) is affected by weather, shielding, and other factors, the positioning precision is limited, and the self-moving device forms a working system containing a base station and implements its own positioning and navigation in the working area by adopting differential positioning means.

The base station in the working system is theoretically fixed at an installation position after initial installation. The self-moving device receives differential data transmitted by the base station to correct a satellite positioning error. Once the base station deviates from the initial installation position, the differential data transmitted by the base station cannot help the self-moving device correct the positioning error. Instead, the self-moving device obtains an incorrect positioning result, bringing about adverse effects on its navigation and work task.

This part provides background information related to the present application, and the background information is not necessarily the existing art.

## SUMMARY

An object of the present application is to solve or at least alleviate part or all of the preceding problems. Therefore, the present application provides a working system of a self-moving device and a base station.

The present application adopts the technical solutions below.

A working system of a self-moving device includes: the self-moving device configured to autonomously travel and perform a work task; a first base station, where the first base station is configured to acquire first satellite observation data, parse the first satellite observation data to generate first differential data, and transmit the first differential data to the self-moving device; and a second base station, where the second base station is configured to acquire second satellite observation data, parse the second satellite observation data to generate second differential data, and transmit the second differential data to the self-moving device. The self-moving device is further configured to receive the first differential data from the first base station and the second differential data from the second base station and calculate a difference parameter according to the first differential data and the second differential data, and in a case where the difference parameter meets a corresponding base station offset condition, it is determined that the first base station and/or the second base station deviates from a corresponding initial installation position, and a base station offset alarm is sent.

In some examples, the difference parameter includes a coordinate difference, and the self-moving device calculates a first differential positioning coordinate of the self-moving device according to the first differential data, calculates a second differential positioning coordinate of the self-moving device according to the corresponding second differential data, and then determines the coordinate difference from the first differential positioning coordinate and the second differential positioning coordinate.

In some examples, the self-moving device determines a corresponding first coordinate difference from a first differential positioning coordinate and a second differential positioning coordinate that are calculated at a first moment and determines a corresponding second coordinate difference from a first differential positioning coordinate and a second differential positioning coordinate that are calculated at a second moment, and in a case where a difference between the first coordinate difference and the second coordinate difference exceeds a coordinate difference threshold, it is determined that the first base station and/or the second base station deviates from the installation position.

In some examples, the difference parameter includes a heading, and the self-moving device calculates a first differential positioning coordinate of the self-moving device according to the first differential data, calculates a second differential positioning coordinate of the self-moving device according to the corresponding second differential data, and then determines the heading from the first differential positioning coordinate and the second differential positioning coordinate.

In some examples, the self-moving device determines a corresponding first heading from a first differential positioning coordinate and a second differential positioning coordinate that are calculated at a first moment and determines a corresponding second heading from a first differential positioning coordinate and a second differential positioning coordinate that are calculated at a second moment, and in a case where a difference between the first heading and the second heading exceeds a heading difference threshold, it is determined that the first base station and/or the second base station deviates from the installation position.

In some examples, the self-moving device includes an odometer and an inertial sensor, after determining that the first base station and/or the second base station deviates from the installation position, the self-moving device determines, according to first differential positioning coordinates at a third moment and a fourth moment, a first differential displacement corresponding to the first base station and determines, according to second differential positioning coordinates at the third moment and the fourth moment, a second differential displacement corresponding to the second base station, and a sensor displacement within a period from the third moment to the fourth moment is calculated by fusing mileage data from the odometer and inertial data from the inertial sensor, where in a case where a difference between the first differential displacement and the sensor displacement exceeds a displacement difference threshold, it is determined that the first base station deviates from the installation position, and in a case where a difference between the second differential displacement and the sensor displacement exceeds the displacement difference threshold, it is determined that the second base station deviates from the installation position.

In some examples, after determining that the first base station deviates from the installation position, the self-moving device determines an offset distance of the first base station and an offset direction of the first base station according to the difference between the first differential displacement and the sensor displacement.

In some examples, the first moment is an initial moment when the self-moving device is powered on and started, and the second moment is a moment during working of the self-moving device, where in a case where the self-moving device includes a single station, the second moment is a static moment during the working of the self-moving device.

In some examples, the self-moving device includes a single station, and the self-moving device uses, in a static state, the single station to receive the first differential data from the first base station and the second differential data from the second base station in turn.

In some examples, the self-moving device includes one or more of a traveling wheel, a vision sensor, and an inertial sensor, where in a case where one or more of the following are met: the traveling wheel is static, a picture currently collected by the vision sensor is static, a variance of inertial data of the inertial sensor within a preset duration does not exceed an inertial variance threshold, and a variance of satellite positioning data within a preset duration does not exceed a positioning variance threshold, the self-moving device determines that the self-moving device is in the static state.

In some examples, the self-moving device includes two stations, and the self-moving device uses, in a static state or a motion state, the two stations to simultaneously receive the first differential data from the first base station and the second differential data from the second base station, respectively.

In some examples, the base station offset condition is met in a case where an offset distance between the first base station or the second base station and the corresponding installation position exceeds 10 cm.

In some examples, the first base station includes an acceleration sensor, the acceleration sensor monitors acceleration of the first base station, and the first base station and/or the self-moving device detects, according to acceleration data monitored by the acceleration sensor, whether the first base station deviates from the installation position.

In some examples, the system further includes an alarm apparatus, where the self-moving device uses the alarm apparatus to give an alarm when the first base station and/or the second base station deviates from the installation position, and the alarm apparatus is an indicator light or a buzzer.

In some examples, the system further includes an external device, where the self-moving device sends a base station offset alarm to the external device when the first base station and/or the second base station deviates from the installation position, so as to cause the external device to give an alarm visually according to the base station offset alarm.

A method for detecting offset of a base station is provided. The method is applied to a working system of a self-moving device, and the system includes the self-moving device and at least two base stations. The method includes the following steps: the self-moving device receives first differential data from a first base station and second differential data from a second base station and calculates a difference parameter according to the first differential data and the second differential data; and in a case where the difference parameter meets a corresponding base station offset condition, the self-moving device determines that the first base station and/or the second base station deviates from a corresponding initial installation position and sends a base station offset alarm.

A working system of a self-moving device includes the self-moving device configured to autonomously travel and perform a work task; and a base station, where the base station is configured to acquire satellite observation data, parse the satellite observation data to generate differential data, and transmit the differential data to the self-moving device. The base station includes an acceleration sensor configured to monitor acceleration of the base station, and the base station transmits acceleration data to the self-moving device. The self-moving device includes a controller. The controller is configured to detect offset status of the base station from an initial installation position according to the acceleration data and selectively send a base station offset alarm according to the offset status.

In some examples, the controller sends the base station offset alarm in a case where a variance of the acceleration data within a preset duration exceeds an acceleration variance threshold.

In some examples, the controller further determines an offset distance of the base station and an offset direction of the base station according to the acceleration data and sends the base station offset alarm indicating the offset distance and the offset direction.

In some examples, the self-moving device further includes a transceiver apparatus, the system further includes an external device, and in a case where the variance exceeds the acceleration variance threshold, the controller further determines a base station serial number of the base station and transmits, through the transceiver apparatus, a base station offset alarm indicating the base station serial number to the external device.

In some examples, the acceleration sensor includes a single-axis accelerometer or a three-axis accelerometer.

A method for detecting offset of a base station is provided. The method is applied to a working system of a self-moving device. The system includes the self-moving device and the base station, the base station includes an acceleration sensor, and the self-moving device includes a controller. The method includes the following steps: the acceleration sensor of the base station monitors acceleration of the base station, and the base station transmits acceleration data to the self-moving device; and the controller of the self-moving device detects offset status of the base station from an initial installation position according to the acceleration data and selectively sends a base station offset alarm according to the offset status.

A base station includes: a collection module configured to acquire satellite observation data at a current observation position; and a sending module configured to send data to a self-moving device. The base station further includes an acceleration sensor and a controller, the acceleration sensor is configured to monitor acceleration of the base station, and the controller is configured to detect offset status of the base station from an initial installation position according to acceleration data monitored by the acceleration sensor and selectively send a base station offset alarm to the self-moving device through the sending module according to the offset status.

In some examples, the controller sends the base station offset alarm in a case where a variance of the acceleration data within a preset duration exceeds an acceleration variance threshold.

In some examples, the sending module includes a radio station.

A method for detecting offset of a base station is provided. The base station includes an acceleration sensor, a controller, and a sending module. The method includes the following steps: the acceleration sensor of the base station monitors acceleration of the base station; and the controller of the base station detects offset status of the base station from an initial installation position according to acceleration data monitored by the acceleration sensor and selectively sends a base station offset alarm to the self-moving device through the sending module according to the offset status.

A working system of a self-moving device includes: the self-moving device configured to autonomously travel and perform a work task, where the self-moving device includes a controller, a sensor assembly, and a differential positioning apparatus; and a base station, where the base station is configured to acquire satellite observation data, parse the satellite observation data to generate differential data, and transmit the differential data to the self-moving device. In a process where the self-moving device moves, the controller is configured to calculate a differential displacement of the self-moving device within a preset duration according to an output of the differential positioning apparatus, calculate a sensor displacement of the self-moving device within the preset duration according to an output of the sensor assembly, and send a base station offset alarm in a case where a difference between the differential displacement and the sensor displacement is greater than a displacement difference threshold.

In some examples, the sensor assembly includes an odometer, and the controller calculates the sensor displacement according to mileage data from the odometer.

In some examples, the sensor assembly further includes an inertial sensor, and the controller fuses the mileage data from the odometer and inertial data from the inertial sensor to calculate the sensor displacement.

In some examples, the sensor assembly includes a camera, and the controller calculates the sensor displacement according to visual mileage data from the camera.

In some examples, the controller calculates an offset distance of the base station and/or an offset direction of the base station according to the difference between the differential displacement and the sensor displacement and transmits the offset distance of the base station and/or the offset direction of the base station when sending the base station offset alarm.

In some examples, the self-moving device further includes a transceiver apparatus, the system further includes an external device, and the controller also sends the base station offset alarm to the external device through the transceiver apparatus in the case where the difference is greater than the displacement difference threshold.

A method for detecting offset of a base station is provided. The method is applied to a working system of a self-moving device. The system includes the self-moving device and the base station, and the self-moving device includes a controller, a sensor assembly, and a differential positioning apparatus. The method includes the following steps: in a process where the self-moving device moves, the controller calculates a differential displacement of the self-moving device within a preset duration according to an output of the differential positioning apparatus and calculates a sensor displacement of the self-moving device within the preset duration according to an output of the sensor assembly; and the controller sends a base station offset alarm in a case where a difference between the differential displacement and the sensor displacement is greater than a displacement difference threshold.

## BRIEF DESCRIPTION OF DRAWINGS

FIG. 1 is a perspective view of a self-moving device as an example in the present application.

FIG. 2 is a perspective view of a base station as an example in the present application.

FIG. 3 is a schematic diagram of electrical control of a base station shown in FIG. 2.

FIG. 4 is a schematic diagram of a working system of a self-moving device as an example in the present application.

FIG. 5 is a schematic diagram of electrical control of the self-moving device in the working system shown in FIG. 4.

FIG. 6 is another schematic diagram of electrical control of the self-moving device in the working system shown in FIG. 4.

FIG. 7A is a flowchart showing base station offset detection based on a coordinate difference in the working system shown in FIG. 4.

FIG. 7B is another flowchart showing base station offset detection based on a coordinate difference in the working system shown in FIG. 4.

FIG. 8A is a flowchart showing base station offset detection based on a heading difference in the working system shown in FIG. 4.

FIG. 8B is another flowchart showing base station offset detection based on a heading difference in the working system shown in FIG. 4.

FIG. 9A is a flowchart showing base station offset detection based on sensor data in the working system shown in FIG. 4.

FIG. 9B is another flowchart showing base station offset detection based on sensor data in the working system shown in FIG. 4.

FIG. 10 is a schematic diagram of a working system of a self-moving device as another example in the present application.

FIG. 11 is a schematic diagram of electrical control of the self-moving device in the working system shown in FIG. 10.

FIG. 12 is a schematic diagram of electrical control of a base station in the working system shown in FIG. 10.

FIG. 13 is another schematic diagram of electrical control of a base station in the working system shown in FIG. 10.

## DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions proposed in the present application are described below in detail in conjunction with drawings and examples.

First, a system architecture of a working system of a self-moving device proposed in the present application and a networking architecture related to the working system of a self-moving device are described. The working system of a self-moving device includes at least the self-moving device and a base station. A satellite positioning system with a satellite as a reference further exists outside the working system. The self-moving device and the base station each perform satellite observation data interaction with the satellite to parse satellite positioning data of the self-moving device and satellite positioning data of the base station and determine a position of the self-moving device and a position of the base station. The self-moving device and the base station also perform differential data interaction to enable the self-moving device to correct a satellite positioning error of the self-moving device based on differential data transmitted by the base station. One or more self-moving devices exist in the working system. The following description is made from a perspective of a single self-moving device. Each self-moving device may perform the same solution. One or more base stations are also provided. The number of base stations in the following different examples may change. When description is made from a perspective of a single base station, each base station may perform the same solution.

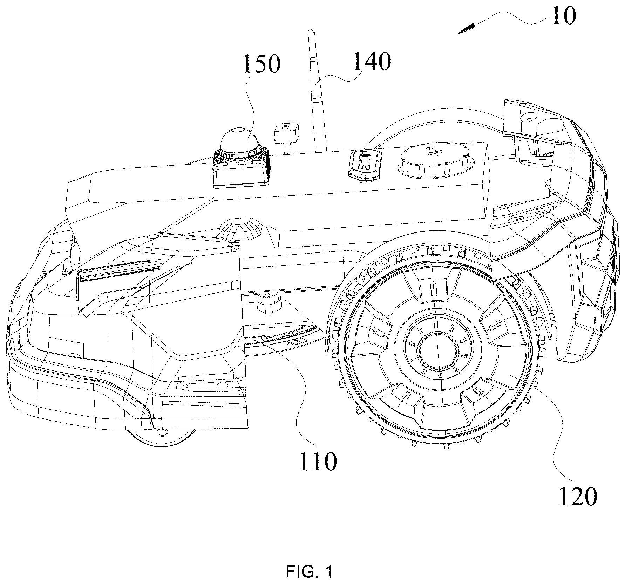

FIG. 1 shows a self-moving device 10 as an example in the present application. The self-moving device 10 shown in FIG. 1 is a robotic mower 10. It is to be understood that a technical solution described in the present application can also suit different scenario requirements and is also applicable to other types of self-moving devices 10 such as a snow thrower and a sweeper.

The self-moving device 10 is configured to autonomously travel and perform a work task. The self-moving device 10 may include a working assembly 110 and a traveling assembly 120. The working assembly 110 includes a functional member 111 and a working motor 112 for driving the functional member 111. The traveling assembly 120 includes traveling wheels 121 and a traveling motor 122 for driving the traveling wheels 121. The robotic mower 10 is used as an example, and the working motor 112 is to drive a blade, that is, the functional member 111, to rotate and perform cutting, and the traveling motor 122 is to drive the traveling wheels 121 to rotate and travel.

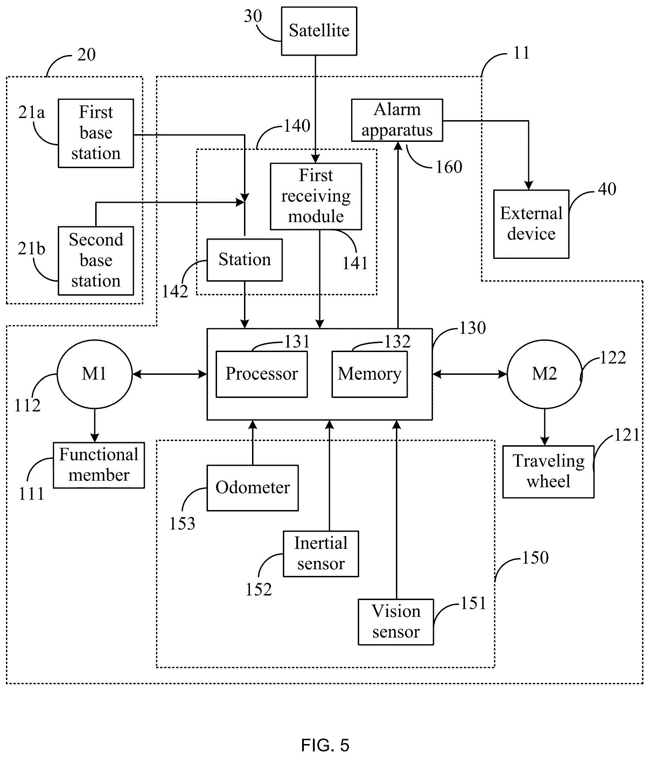

Referring to FIG. 5, FIG. 6, and FIG. 11, the self-moving device 10 may further include a controller 130 and a transceiver apparatus 140. The controller 130 includes a processor 131 such as a microcontroller unit (MCU), an Advanced Reduced Instruction Set Computing Machine (ARM), a digital signal processor (DSP) and includes a memory 132 that store instructions executable by the processor 131 such as a read-only memory (ROM), a random access memory (RAM), a flash EEPROM, and a combination thereof. The controller 130 is configured to execute various instructions to complete corresponding calculations and control work. The transceiver apparatus 140 is configured to receive related data from a satellite 30 and a base station 20 for the controller 130 to correspondingly process. The robotic mower 10 is still used as an example. The transceiver apparatus 140 may receive satellite observation data from the satellite 30 and differential data from the base station 20. The controller 130 is to calculate a current position of the robotic mower 10 and control starts and stops and rotational speeds of the traveling motor 122 and the working motor 112 based on the satellite observation data and the differential data so that the robotic mower 10 travels on a specified trajectory at a specified speed and correctly performs a cutting task in a specified area.

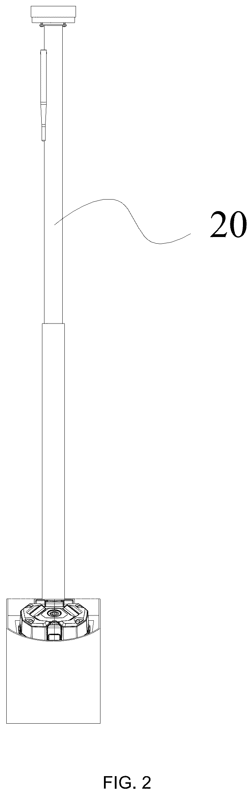

FIG. 2 shows the base station 20 as an example in the present application. The base station 20 is configured to acquire the satellite observation data, parse the acquired satellite observation data to generate the corresponding differential data, and then transmit the differential data to the self-moving device 10 for positioning correction of the self-moving device 10. In differential positioning technologies represented by real-time kinematic positioning (RTK), after receiving the satellite observation data, the base station 20 fixed to an initial installation position can theoretically calculate, in conjunction with the unchanged installation position of the base station 20, the differential data which can be used by the self-moving device 10 to correct the satellite positioning error.

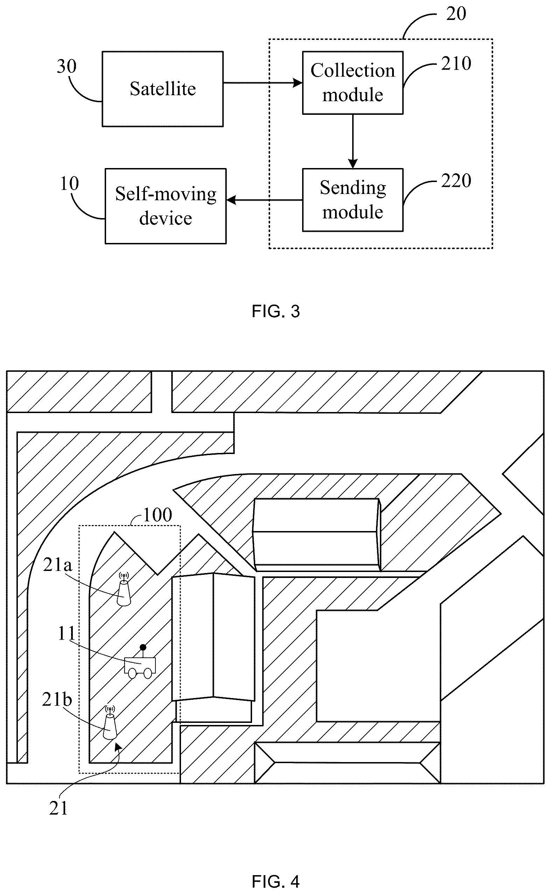

Referring to FIG. 3, FIG. 12, and FIG. 13, the base station 20 may include at least a collection module 210 and a sending module 220. The collection module 210 is configured to implement remote communication and is configured to acquire the satellite observation data while the sending module 220 is configured to implement near-field communication in a working area and is configured to send the differential data to the self-moving device 10.

For clarifying related concepts in the technical solution, words are unified and interpreted. As described above, the self-moving device 10 transmits and receives data by using the transceiver apparatus 140. The transceiver apparatus 140 includes a first receiving module 141 and a second receiving module 142, where the first receiving module 141 performs the remote communication with the satellite positioning system with the satellite 30 as the reference to acquire the satellite observation data, and the second receiving module 142 performs the near-field communication with the base station 20 in the working area to acquire the differential data. In some examples, the first receiving module 141 is a satellite positioning receiver, and the second receiving module 142 is a unicast or broadcast station. In other examples, in terms of hardware, the first receiving module 141 and the second receiving module 142 actually belong to the same transceiver group. In some examples, the second receiving module 142 in the transceiver apparatus of the self-moving device 10 is a station, and the same self-moving device 10 may be provided with one or more stations.

Correspondingly, the base station 20 performs the remote communication with the satellite 30 by using the collection module 210 to acquire the satellite observation data and performs the near-field communication with the self-moving device 10 in the working area by using the sending module 220 to transmit the differential data to the self-moving device 10. In some examples, the collection module 210 is a satellite positioning receiver, and the sending module 220 is a radio station such as a unicast or broadcast station. In other examples, in terms of hardware, the collection module 210 and the sending module 220 actually belong to the same transceiver group.

A working system 100 of a self-moving device is specifically described below. Referring to FIG. 4, the working system 100 of a self-moving device includes at least one self-moving device 11 and two base stations 21, that is, a first base station 21a and a second base station 21b. The first base station 21a is initially installed at a first installation position. The first base station 21a acquires first satellite observation data indicating the first installation position, generates first differential data from the first satellite observation data, and transmits the first differential data to the self-moving device 11. The second base station 21b is initially installed at a second installation position. The second base station 21b acquires second satellite observation data indicating the second installation position, generates second differential data from the second satellite observation data, and transmits the second differential data to the self-moving device 11.

It is to be understood that the working system 100 may include multiple self-moving devices, and each self-moving device may receive differential positioning data transmitted by the first base station and the second base station and perform positioning correction on the self-moving device and base station offset detection. Alternatively, the working system 100 may include multiple self-moving devices and more than two base stations, one self-moving device corresponds to two base stations to form a detection combination, and the self-moving device receives differential data from the two base stations corresponding to the self-moving device and detects whether the two base stations deviate from installation positions. Other solutions derived therefrom are not described again.

After receiving the first differential data from the first base station 21a and the second differential data from the second base station 21b, the self-moving device 11 is to calculate a corresponding difference parameter based on the first differential data and the second differential data. In some examples, the self-moving device 11 receives first differential data and second differential data that correspond to multiple moments and calculates difference parameters that correspond to the multiple moments. In other examples, the self-moving device 11 receives first differential data and second differential data at the same moment and calculates multiple types of difference parameters at the moment. In other examples, the self-moving device 11 calculates, in conjunction with the preceding two examples, multiple different types of difference parameters corresponding to multiple moments.

It is to be noted that differential positioning implemented by the preceding devices such as the self-moving device 11, the first base station 21a, and the second base station 21b theoretically requires time synchronization and clock sharing. The first satellite observation data and the second satellite observation data described above and satellite positioning data to be described below have a timing correspondence during processing. In a case where the first base station 21a and the second base station 21b receive the satellite observation data and send the differential data periodically, relevant data receiving and sending periods and offset detection periods should be synchronized.

In some examples, as shown in FIG. 5, one self-moving device 11 is provided with only a single station 142, and the single station 142 actually receives the differential data from the first base station 21a and the second base station 21b in turn. However, due to the time synchronization requirement of the differential positioning, in a case where the self-moving device 11 is provided with only the single station 142, to implement offset detection of the base station 21, the self-moving device 11 is required to sequentially receive the first differential data from the first base station 21a and the second differential data from the second base station 21b when the self-moving device 11 is in a static state, so as to obtain the first differential data and the second differential data that have a correspondence. In other words, the first differential data and the second differential data at the same moment and the satellite positioning data of the self-moving device 11 to be described below should be obtained at the same position, where the self-moving device 11 obtains the satellite positioning data by receiving and parsing the satellite observation data.

Multiple optional implementations are available for the self-moving device 11 to detect whether the self-moving device 11 is in the static state. In some examples, the self-moving device 11 determines whether the self-moving device 11 is currently in the static state by detecting whether traveling wheels of the self-moving device 11 are completely static, and specifically, the self-moving device 11 may detect a rotational speed, torque, and the like of a traveling motor. In other examples, the self-moving device 11 further includes a vision sensor 151 and may determine whether the self-moving device 11 is static by detecting whether a picture collected by the vision sensor 151 is static. In other examples, the self-moving device 11 further includes an inertial sensor 152 and may determine whether the self-moving device 11 is static by detecting whether a variance of inertial data of the inertial sensor 152 such as acceleration within a preset duration exceeds an inertial variance threshold. In other examples, the self-moving device 11 obtains the satellite positioning data of the self-moving device 11 by receiving and parsing the satellite observation data and determines whether the self-moving device 11 is static by detecting whether a variance of the satellite positioning data of the self-moving device 11 within a preset duration exceeds a positioning variance threshold.

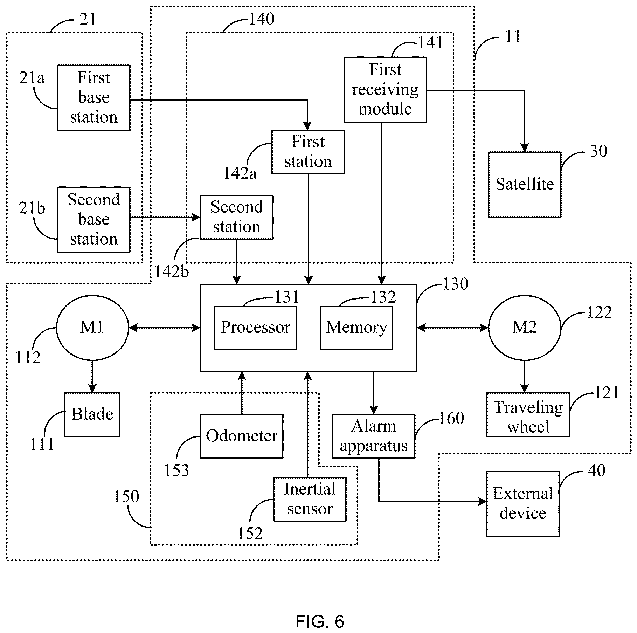

In other examples, as shown in FIG. 6, one self-moving device 11 is provided with two stations 142a and 142b. The two stations 142a and 142b receive the differential data from the first base station 21a and the differential data from the second base station 21b independently of each other. In a case where the two stations are provided, obtaining the first differential data and the second differential data at the same moment does not require the self-moving device 11 to be static, and the self-moving device 11 can directly receive and obtain, in the static state or a motion state, the differential data for detecting an offset of the base station 21.

In some examples, the preceding difference parameter includes a coordinate difference. The coordinate difference is a difference between differential positioning coordinates of the self-moving device 11 that the self-moving device 11 uses the first differential data and the second differential data at the same moment to calculate, respectively. Specifically, the self-moving device 11 may calculate a first differential positioning coordinate from the first differential data and calculate a second differential positioning coordinate from the second differential data. A difference between a first differential positioning coordinate and a second differential positioning coordinate at a first moment is a first coordinate difference, and a difference between a first differential positioning coordinate and a second differential positioning coordinate at a second moment is a second coordinate difference. When calculating the corresponding differential positioning coordinate based on the differential data, the self-moving device 11 may be required to obtain a fixed solution, and the fixed solution is a high-precision solution in a differential positioning technology.

In other examples, the preceding difference parameter includes a heading. The heading is a positioning offset vector determined from the first differential positioning coordinate and the second differential positioning coordinate after the self-moving device 11 uses the first differential data and the second differential data at the same moment to calculate the corresponding first differential positioning coordinate and the corresponding second differential positioning coordinate, respectively. Specifically, the self-moving device 11 may determine a first heading from the first differential positioning coordinate and the second differential positioning coordinate at the first moment and determine a second heading from the first differential positioning coordinate and the second differential positioning coordinate at the second moment.

As described above, in the case where the self-moving device 11 is provided with only the single station 142, the self-moving device 11 is required to sequentially receive the first differential data and the second differential data at the position in the static state. In view of this, in some examples, the first moment at which the difference parameter such as the first coordinate difference and the first heading is obtained is an initial moment at which the self-moving device 11 is powered on and started, and the self-moving device 11 does not start motion at the initial moment, while the second moment at which the difference parameter such as the second coordinate difference and the second heading is obtained is a static moment during working of the self-moving device 11, and the static moment is a moment at which the self-moving device 11 has started performing the work task but midway stops motion due to charging, a rest, and being trapped.

After obtaining the preceding difference parameters, the self-moving device 11 is to determine whether each difference parameter meets a corresponding base station offset condition, and in a case where the difference parameter meets the corresponding base station offset condition, it is determined that the first base station 21a deviates from the first installation position, and/or the second base station 21b deviates from the second installation position. In some examples, the self-moving device 11 uses operation values of one or more difference parameters at one moment to determine whether the first base station 21a and the second base station 21b deviate from the corresponding installation positions. For example, the self-moving device 11 may determine the deviation of the base station 21 in the case where a coordinate difference or a heading at any moment exceeds a corresponding threshold. In other examples, the self-moving device 11 uses operation values of one or more difference parameters at multiple moments to determine whether the first base station 21a and the second base station 21b deviate from the corresponding installation positions. For example, the self-moving device 11 may determine the deviation of the base station 21 in the case where a difference between coordinate differences or headings at two moments exceeds a corresponding threshold.

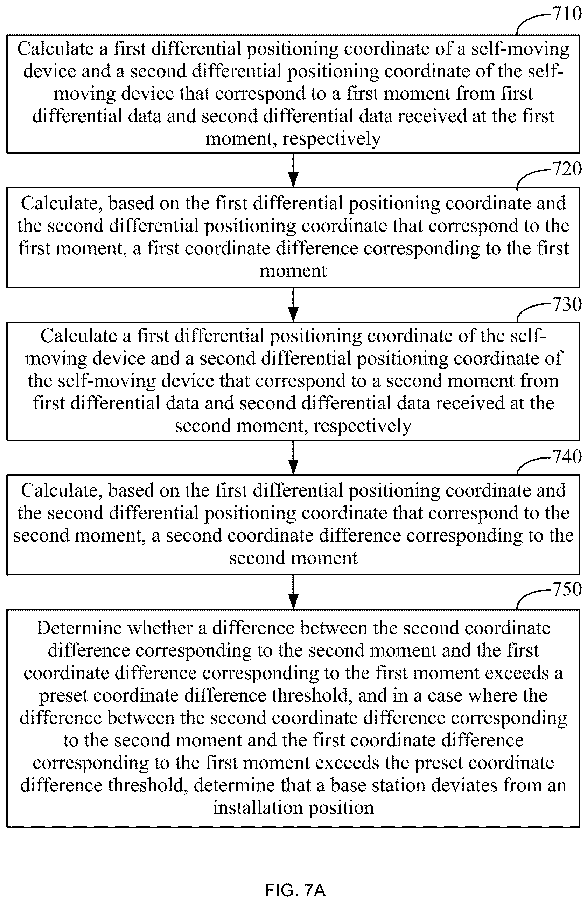

In some examples, referring to FIG. 7A, the self-moving device 11 is provided with a solution for detecting the offset of the base station 21, and the solution includes the steps below. In 710, the first differential positioning coordinate ($a_1^{t1}$, $b_1^{t1}$) of the self-moving device 11 corresponding to the first moment is calculated by the self-moving device 11 from first differential data received at the first moment, and the second differential positioning coordinate ($a_2^{t1}$, $b_2^{t1}$) of the self-moving device 11 corresponding to the first moment is calculated by the self-moving device 11 from second differential data received at the first moment.

In 720, the first coordinate difference $\Delta_{21}^{t1}$ corresponding to the first moment is calculated based on the first differential positioning coordinate and the second differential positioning coordinate that correspond to the first moment, where $\Delta_{21}^{t1} = \left[\left(a_2^{t1}, b_2^{t1}\right) - \left(a_1^{t1}, b_1^{t1}\right)\right]$.

In 730, the first differential positioning coordinate ($a_1^{t2}$, $b_1^{t2}$) of the self-moving device 11 and the second differential positioning coordinate ($a_2^{t2}$, $b_2^{t2}$) of the self-moving device 11 that correspond to the second moment are calculated by the self-moving device 11 from first differential data and second differential data received at the second moment, respectively.

In 740, the second coordinate difference $\Delta_{21}^{t2}$ corresponding to the second moment is calculated based on the first differential positioning coordinate and the second differential positioning coordinate that correspond to the second moment, where $\Delta_{21}^{t2} = \left[\left(a_2^{t2}, b_2^{t2}\right) - \left(a_1^{t2}, b_1^{t2}\right)\right]$.

In 750, the self-moving device 11 determines whether a difference ($\Delta_{21}^{t2} - \Delta_{21}^{t1}$) between the second coordinate difference corresponding to the second moment and the first coordinate difference corresponding to the first moment exceeds a preset coordinate difference threshold ($\Delta a$, $\Delta b$), and in a case where the difference ($\Delta_{21}^{t2} - \Delta_{21}^{t1}$) between the second coordinate difference corresponding to the second moment and the first coordinate difference corresponding to the first moment exceeds the preset coordinate difference threshold ($\Delta a$, $\Delta b$), it is determined that the first base station 21a deviates from the first installation position, and/or the second base station 21b deviates from the second installation position, where $\left(\Delta_{21}^{t2} - \Delta_{21}^{t1}\right) = \{[(a_2^{t2}, b_2^{t2}) - (a_1^{t2}, b_1^{t2})] - [(a_2^{t1}, b_2^{t1}) - (a_1^{t1}, b_1^{t1})]\}$ .

When the first base station 21a and the second base station 21b are initially installed at the corresponding installation positions, the self-moving device 11 receives first differential data and second differential data multiple times and calculates differences between first coordinate differences and second coordinate differences. The coordinate difference threshold ($\Delta a$, $\Delta b$) may be determined based on the differences between the first coordinate differences and the second coordinate differences for simulation of a normal coordinate difference error status in a case where the base station 21 is subjected to no offset.

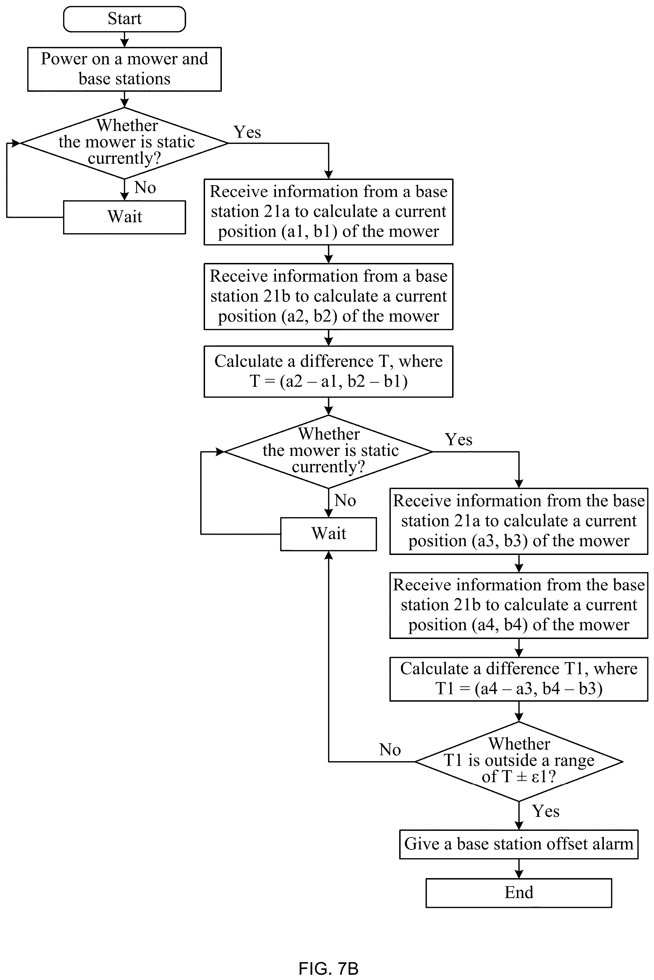

FIG. 7B shows a specific process flow of the preceding solution for detecting the offset of the base station 21, where the self-moving device 11 provided with only the single station is used as an example.

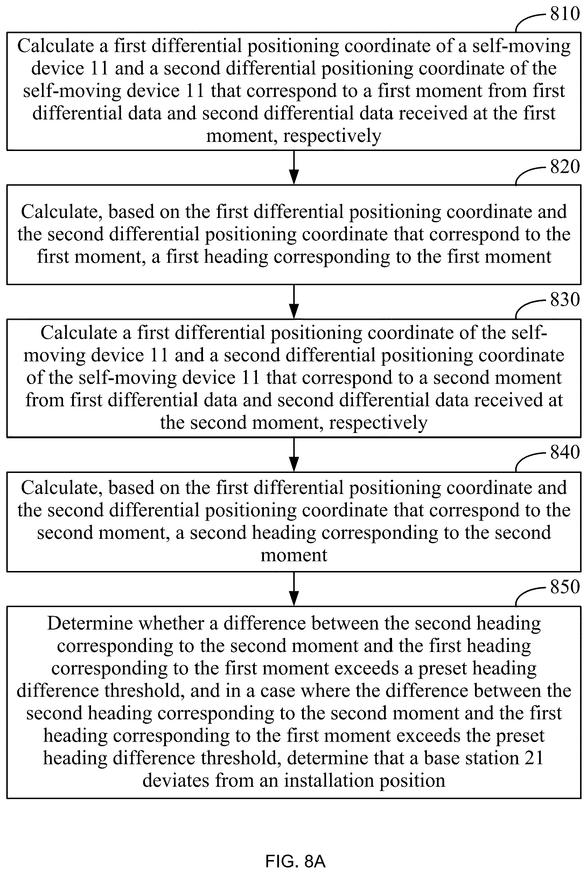

In other examples, referring to FIG. 8A, the self-moving device 11 is provided with another solution for detecting the offset of the base station 21, and the solution includes the steps below. In 810, the first differential positioning coordinate ($a_1^{t1}$, $b_1^{t1}$) of the self-moving device 11 corresponding to the first moment is calculated by the self-moving device 11 from the first differential data received at the first moment, and the second differential positioning coordinate ($a_2^{t1}$, $b_2^{t1}$) of the self-moving device 11 corresponding to the first moment is calculated by the self-moving device 11 from the second differential data received at the first moment.

In 820, the first heading $\theta_{21}^{t1}$ corresponding to the first moment is calculated based on the first differential positioning coordinate and the second differential positioning coordinate that correspond to the first moment, where

$$\theta_{21}^{t1} = arctan[(a_2^{t1} - a_1^{t1})/(b_2^{t1} - b_1^{t1})]$$ .

In 830, the first differential positioning coordinate ($a_1^{t2}$, $b_1^{t2}$) of the self-moving device 11 and the second differential positioning coordinate ($a_2^{t2}$, $b_2^{t2}$) of the self-moving device 11 that correspond to the second moment are calculated by the self-moving device 11 from the first differential data and the second differential data received at the second moment, respectively.

In 840, the second heading $\theta_{21}^{t2}$ corresponding to the second moment is calculated based on the first differential positioning coordinate and the second differential positioning coordinate that correspond to the first moment, where

$$\theta_{21}^{t2} = arctan[(a_2^{t2} - a_1^{t2})/(b_2^{t2} - b_1^{t2})]$$ .

In 850, the self-moving device 11 determines whether a difference ($\theta_{21}^{t2} - \theta_{21}^{t1}$) between the first heading and the second heading exceeds a preset heading difference threshold $\Delta\theta$, and in a case where the difference ($\theta_{21}^{t2} - \theta_{21}^{t1}$) between the first heading and the second heading exceeds the preset heading difference threshold $\Delta\theta$, it is determined that the first base station 21a deviates from the first installation position, and/or the second base station 21b deviates from the second installation position.

When the first base station 21a and the second base station 21b are initially installed at the corresponding installation positions, the self-moving device 11 receives the first differential data and the second differential data multiple times and calculates differences between first headings and second headings, and the heading difference threshold $\Delta\theta$ may be determined based on the differences between the first headings and the second headings for simulation of a normal heading difference error status in the case where the base station 21 is subjected to no offset.

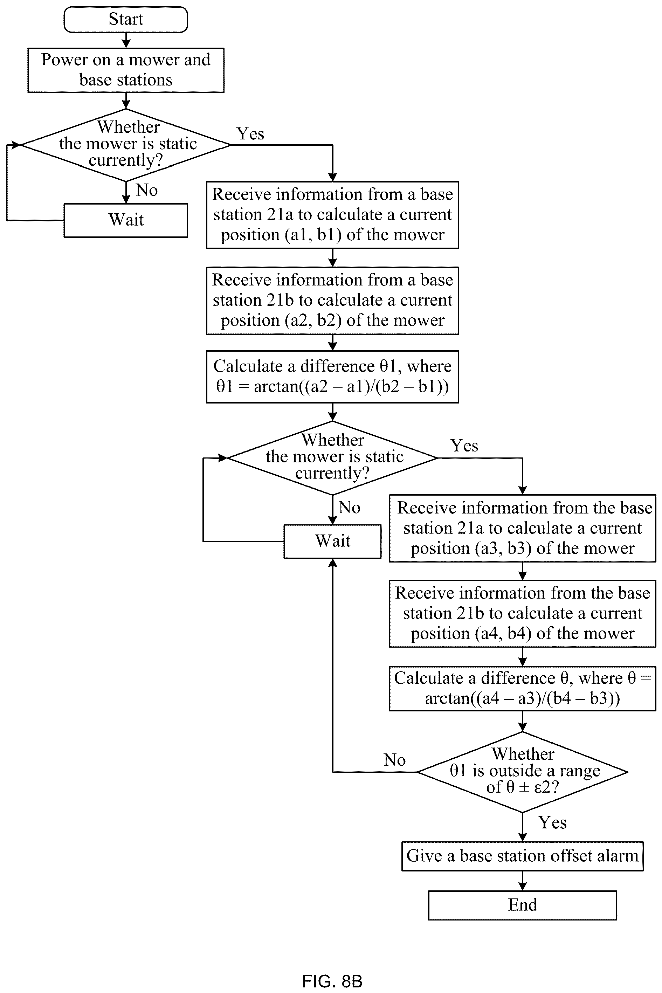

FIG. 8B shows a specific process flow of the preceding solution for detecting the offset of the base station 21, where the self-moving device 11 provided with only the single station is used as an example.

In some examples, each base station offset condition can be met in a case where an offset distance between the first base station 21a and the first installation position exceeds 10 cm, or an offset distance between the second base station 21b and the second installation position exceeds 10 cm. Specifically, by using an example in which a difference between headings at two moments exceeds the heading difference threshold, a numerical range of the heading difference in a case where an offset of the first base station 21a from the first installation position is within a range of 5 to 15 cm and a numerical range of the heading difference in a case where an offset of the second base station 21b from the second installation position is within a range of 5 to 15 cm may be determined separately. In addition, the corresponding heading difference threshold is determined based on the two numerical ranges so that if the offset distance between the first base station 21a and the corresponding installation position or the offset distance between the second base station 21b and the corresponding installation position exceeds 10 cm, positive determination is triggered.

It is to be noted that with the preceding solution, the self-moving device 11 can detect deviation of any one of the two base stations 21 of the working system 100 from the corresponding installation position, but the self-moving device 11 cannot detect which specific one of the two base stations 21 deviates from the installation position and cannot detect the offset distance between the base station 21 and the corresponding installation position or an offset direction. Therefore, an optimization solution described below is proposed, where the optimization solution can further improve detection precision.

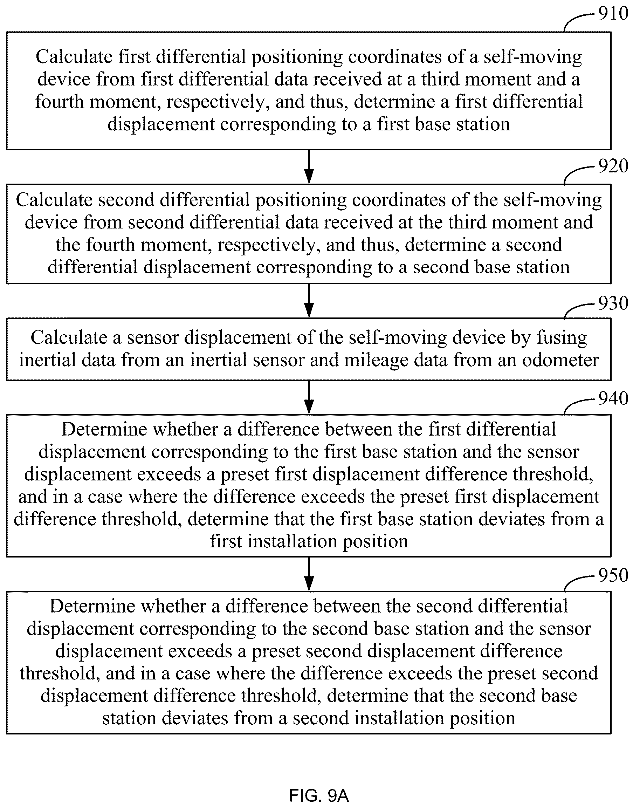

As shown in FIG. 5, FIG. 6, and FIG. 11, the self-moving device 11 may further include an inertial sensor 152 and an odometer 153. The inertial sensor 152 is configured to collect inertial data such as acceleration during the motion of the self-moving device 11, and the odometer 153 is configured to collect mileage data during the motion of the self-moving device 11. In some examples, referring to FIG. 9A, a solution of the self-moving device 11 after the detection of the offset of the base station 21 further includes the steps below.

In 910, first differential positioning coordinates ($a_1^{t3}$, $b_1^{t3}$) and ($a_1^{t4}$, $b_1^{t4}$) of the self-moving device 11 that correspond to a third moment and a fourth moment are calculated by the self-moving device 11 from first differential data received at the third moment and the fourth moment, respectively, and thus, a first differential displacement $\Delta_1^{t34}$ corresponding to the first base station 21a from the third moment to the fourth moment is determined, where

$$\Delta_1^{t34} = [(a_1^{t3}, b_1^{t3}) - (a_1^{t4}, b_1^{t4})].$$

In 920, second differential positioning coordinates ($a_2^{t3}$, $b_2^{t3}$) and ($a_2^{t4}$, $b_2^{t4}$) of the self-moving device 11 that correspond to the third moment and the fourth moment are calculated from second differential data received at the third moment and the fourth moment, respectively, and thus, a second differential displacement $\Delta_2^{t34}$ corresponding to the second base station 21b is determined, where $\Delta_2^{t34} = [(a_2^{t3}, b_2^{t3}) - (a_2^{t4}, b_2^{t4})].$

In 930, the self-moving device 11 calculates a sensor displacement $\Delta_{xy}^{t34}$ of the self-moving device 11 from the third moment to the fourth moment by fusing the inertial data from the inertial sensor 152 and the mileage data from the odometer 153, where $\Delta_{xy}^{t34} = (x, y).$

In 940, the self-moving device 11 determines whether a difference $\Delta_{1xy}^{t34}$ between the first differential displacement $\Delta_1^{t34}$ corresponding to the first base station 21a and the sensor displacement $\Delta_{xy}^{t34}$ exceeds a preset first displacement difference threshold ($\Delta 1x$, $\Delta 1y$), and in a case where the difference $\Delta_{1xy}^{t34}$ exceeds the preset first displacement difference threshold ($\Delta 1x$, $\Delta 1y$), it is determined that the first base station 21a deviates from the first installation position, where $\Delta_1^{t34} = [(a_1^{t3}, b_1^{t3}) - (a_1^{t4}, b_1^{t4})]$, $\Delta_{xy}^{t34} = (x^{t34}, y^{t34})$, and $\Delta_{1xy}^{t34} = \{[(a_1^{t3}, b_1^{t3}) - (a_1^{t4}, b_1^{t4})] - (x^{t34}, y^{t34})\}.$

In 950, it is determined whether a difference $\Delta_{2xy}^{t34}$ between the second differential displacement $\Delta_2^{t34}$ corresponding to the second base station 21b and the sensor displacement $\Delta_{xy}^{t34}$ exceeds a preset second displacement difference threshold ($\Delta 2x$, $\Delta 2y$), and in a case where the difference $\Delta_{2xy}^{t34}$ exceeds the preset second displacement difference threshold ($\Delta 2x$, $\Delta 2y$), it is determined that the second base station 21b deviates from the second installation position, where $\Delta_2^{t34} = [(a_2^{t3}, b_2^{t3}) - (a_2^{t4}, b_2^{t4})]$, $\Delta_{xy}^{t34} = (x^{t34}, y^{t34})$, and

$$\Delta_{2xy}^{t34} = \left\{ \left[ \left( a_2^{t3}, b_2^{t3} \right) - \left( a_2^{t4}, b_2^{t4} \right) \right] - \left( x^{t34}, y^{t34} \right) \right\}.$$

Furthermore, after determining that the first base station 21a deviates from the first installation position, the self-moving device 11 may determine, from the difference $\Delta_{1xy}^{t34}$ between the first differential displacement $\Delta_{1}^{t34}$ and the sensor displacement $\Delta_{xy}^{t34}$, the offset distance by which the first base station 21a deviates from the first installation position and an offset direction in which the first base station 21a deviates from the first installation position, where

$$\Delta_{1}^{t34} = \left[ \left( a_1^{t3}, b_1^{t3} \right) - \left( a_1^{t4}, b_1^{t4} \right) \right], \quad \Delta_{xy}^{t34} = \left( x^{t34}, y^{t34} \right) \qquad , \qquad \text{and}$$

$$\Delta_{1xy}^{t34} = \left\{ \left[ \left( a_1^{t3}, b_1^{t3} \right) - \left( a_1^{t4}, b_1^{t4} \right) \right] - \left( x^{t34}, y^{t34} \right) \right\} \qquad . \qquad \text{The} \qquad \text{offset} \qquad \text{distance} \qquad \text{is}$$

$$\sqrt[2]{\left( a_1^{t3} - a_1^{t4} - x^{t34} \right)^2 + \left( b_1^{t3} - b_1^{t4} - y^{t34} \right)^2} \text{ , and the offset direction is } \varphi_1 \text{ east of north, where}$$

$$\varphi_1 = arctan\left[ \left( a_1^{t3} - a_1^{t4} - x^{t34} \right) / \left( b_1^{t3} - b_1^{t4} - y^{t34} \right) \right].$$

Similarly, after determining that the second base station 21b deviates from the second installation position, the self-moving device 11 may determine, from the difference $\Delta_{2xy}^{t34}$ between the second differential displacement $\Delta_{2}^{t34}$ and the sensor displacement $\Delta_{xy}^{t34}$, the offset distance by which the second base station 21b deviates from the second installation position and an offset direction in which the second base station 21b deviates from the second installation position, where

$$\Delta_{2}^{t34} = \left[ \left( a_2^{t3}, b_2^{t3} \right) - \left( a_2^{t4}, b_2^{t4} \right) \right] \qquad , \qquad \Delta_{xy}^{t34} = \left( x^{t34}, y^{t34} \right) \qquad , \qquad \text{and}$$

$$\Delta_{2xy}^{t34} = \left\{ \left[ \left( a_2^{t3}, b_2^{t3} \right) - \left( a_2^{t4}, b_2^{t4} \right) \right] - \left( x^{t34}, y^{t34} \right) \right\} \qquad . \qquad \text{The} \qquad \text{offset} \qquad \text{distance} \qquad \text{is}$$

$$\sqrt[2]{\left( a_2^{t3} - a_2^{t4} - x^{t34} \right)^2 + \left( b_2^{t3} - b_2^{t4} - y^{t34} \right)^2} \text{ , and the offset direction is } \varphi_2 \text{ east of north, where}$$

$$\varphi_2 = arctan\left[ \left( a_2^{t3} - a_2^{t4} - x^{t34} \right) / \left( b_2^{t3} - b_2^{t4} - y^{t34} \right) \right].$$

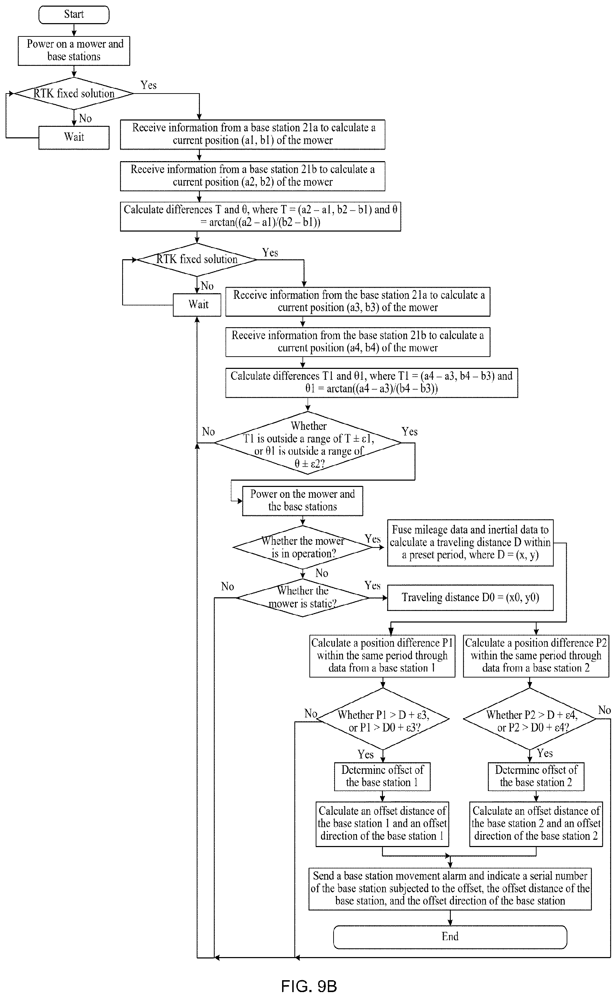

FIG. 9B shows a specific process flow of the preceding solution for detecting the offset of the base station 21, where the self-moving device 11 provided with the two stations is used as an example.

In some examples, the self-moving device 11 may stop its cutting and traveling work after detecting that the first base station 21a and/or the second base station 21b deviates from the initial installation position.

In some examples, the working system 100 of a self-moving device further includes an alarm apparatus. The alarm apparatus may send a base station offset alarm when the self-moving device 11 detects that the first base station 21a and/or the second base station 21b deviates from the installation position. This configuration aims to enable a user to adjust the position of the base station 21 and restore the base station 21 to the installation position in time, thereby avoiding errors in positioning and navigation of the self-moving device 11. In some examples, the preceding alarm apparatus is an indicator light or a buzzer. In some cases, as shown in FIG. 5, FIG. 6, and FIG. 11, the alarm apparatus 160 is assembled in the self-moving device 11, and the self-moving device 11 sends the alarm through the alarm apparatus 160 after detecting the offset of the base station 21. In other cases, the alarm apparatus is assembled in the base station 21, and the self-moving device 11 notifies the base station 21 through the station 142 after detecting the offset of the base station 21, and the base station 21 sends the alarm through the alarm apparatus after receiving the notification.

In some examples, as shown in FIG. 5, FIG. 6, and FIG. 11, the working system 100 of a self-moving device further includes an external device 40. In some examples, the external device 40 is a user device such as a smartphone or a tablet computer. A related program for detecting the offset of the base station 21 runs in the external device 40. After detecting that the first base station 21a and/or the second base station 21b deviates from the corresponding installation position, the self-moving device 11 may transmit the base station offset alarm to the preceding external device 40 through the transceiver apparatus 140 such as an Internet communication module. The related program running in the external device 40 may give an alarm visually or audibly in response to the received base station offset alarm. In other examples, the base station 21 may send the base station offset alarm to the external device 40.

In some examples, when the self-moving device 11 detects the offset of the base station 21 and sends the base station offset alarm, a serial number of the base station 21 is carried. Specifically, different indicator lights or buzzers with different frequencies may be configured to indicate the specific base station 21 which is subjected to the offset, while giving a prompt about the offset of the base station 21. Alternatively, when the base station offset alarm is sent to the external device, information about the serial number of the base station 21 may be carried so that the external device gives the prompt visually or audibly. In other examples, when the self-moving device 11 sends the base station offset alarm, information such as the offset distance of the base station 21 and the offset direction of the base station 21 may also be carried so that the user restores the base station 21 to the installation position in time.

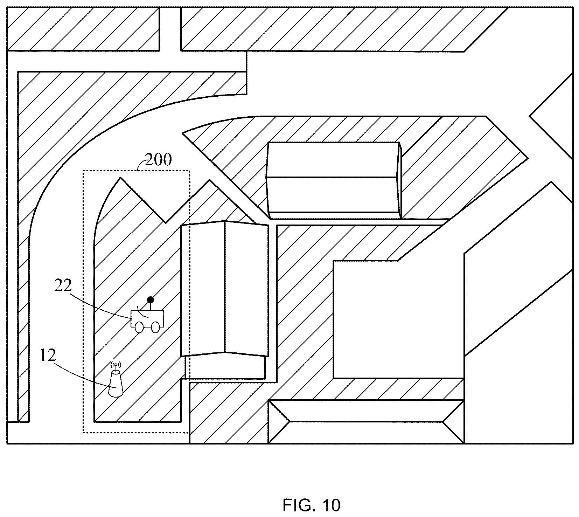

Another working system 200 of a self-moving device is specifically described below. Referring to FIG. 10, the working system 200 of a self-moving device includes at least one self-moving device 12 and at least one base station 22. The following description is made mainly from a perspective of detection of offset of one base station 22 by one self-moving device 12. It is to be understood that the working system 200 of a self-moving device may include more self-moving devices 12 and more base stations 22. As similarly described above, the base station 22 is initially installed at a corresponding installation position, and the base station 22 acquires satellite observation data indicating the installation position, parses the satellite observation data to generate differential data, and transmits the differential data to the self-moving device 12.

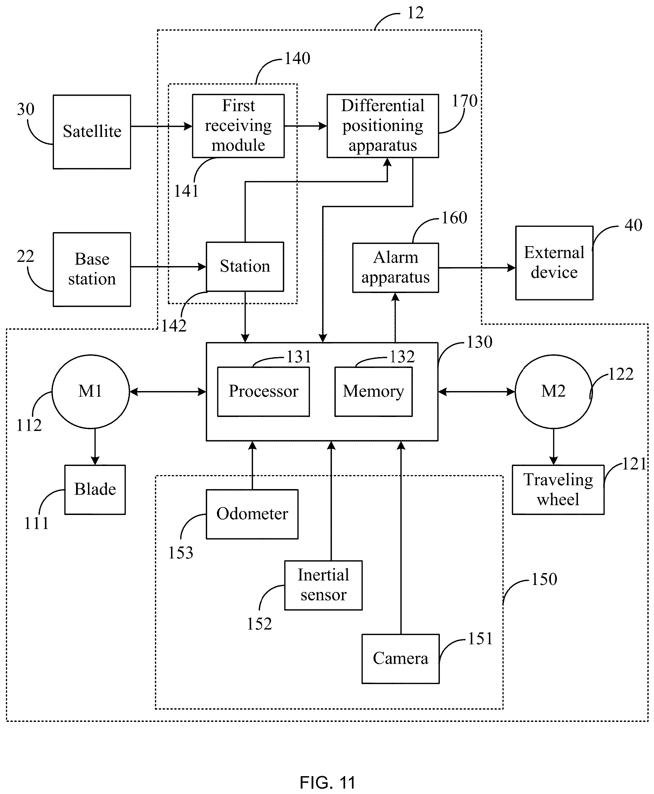

Referring to FIG. 11, the self-moving device 12 may further include a sensor assembly 150 and a differential positioning apparatus 170 in addition to a working assembly 110, a traveling assembly 120, a controller 130, and a transceiver apparatus 140. The sensor assembly 150 may include sensor components such as a camera 151, an inertial sensor 152, and an odometer 153, and the differential positioning apparatus 170 is configured to calculate and output data such as a current differential positioning coordinate of the self-moving device 12 by using satellite data and differential data received by the transceiver apparatus 140.

In a process where the self-moving device 12 moves, the controller of the self-moving device 12 is configured to calculate a differential displacement of the self-moving device 12 within one period of a preset duration based on an output of the differential positioning apparatus and calculate a sensor displacement of the self-moving device 12 within the same period from an output of the sensor assembly. In terms of data sources, the differential displacement depends on the satellite positioning system 30 and the base station 22, and the sensor displacement depends on the sensor assembly 150 assembled to the self-moving device 12. Theoretically, the differential displacement and the sensor displacement should be the same value in the case where the base station 22 is subjected to no offset.

Specifically, the differential positioning apparatus 170 may parse the satellite observation data received by a first receiving module 141 to obtain satellite positioning data of the differential positioning apparatus 170, and the differential positioning apparatus 170 may then calculate the differential positioning coordinate of the self-moving device 12 at a current moment based on the differential data received by a station 142 and the preceding satellite positioning data. Through the output of the differential positioning apparatus 170, the controller 130 may calculate a difference between differential positioning coordinates at two moments of a duration interval that is the preset duration. That is, the controller 130 may determine a differential displacement within the period. For example, the controller 130 may determine, from a difference between differential positioning coordinates of the self-moving device 12 at a first moment and a second moment, a differential displacement corresponding to a period from the first moment to the second moment.

Multiple optional implementations are available for the self-moving device 12 to calculate the sensor displacement of the self-moving device 12 within the same period from the output of the sensor assembly 150. In some examples, the sensor assembly 150 of the self-moving device 12 includes the odometer 153, and the controller 130 may calculate the sensor displacement within the preceding period based on mileage data from the odometer 153. In other examples, the sensor assembly 150 of the self-moving device 12 further includes the inertial sensor 152 in addition to the odometer 153, and the controller 130 may fuse the mileage data from the odometer 153 and inertial data from the inertial sensor 152 to calculate the sensor displacement within the preceding period. In other examples, the sensor assembly 150 of the self-moving device 12 includes the camera 151, and the controller 130 may calculate the sensor displacement within the preceding period based on visual mileage data from the camera 151. Of course, the self-moving device 12 may also include other types of sensors and calculate the sensor displacement within the period by combining data from multiple sensors therein.

After obtaining the differential displacement and the sensor displacement mentioned above, the self-moving device 12 may determine whether the base station 22 deviates from its installation position by comparing the differential displacement and the sensor displacement within the same period. Specifically, the controller 130 may determine whether a difference between the differential displacement and the sensor displacement within the same period exceeds a preset displacement difference threshold. **In** a case where the difference between the differential displacement and the sensor displacement within the same period exceeds the preset displacement difference threshold, it is determined that the base station 22 deviates from its installation position, and a base station offset alarm is sent. Displacement difference thresholds corresponding to different base stations 22 may be different for simulation of normal displacement difference error status of each of the different base stations 22 at different installation positions.

**In** some examples, after determining that the base station 22 deviates from the corresponding installation position, the self-moving device 12 may further calculate an offset distance of the base station 22 and/or an offset direction of the base station 22 from the difference between the differential displacement and the sensor displacement within the same period. Specifically, if the differential displacement calculated by the controller 130 within the period that is the preset duration is $\Delta^{t12}$, and the sensor displacement calculated within the same period is $\Delta_{xy}^{t12}$, the offset distance by which the base station 22 deviates from the corresponding installation position may be calculated as

$$\sqrt[2]{\left(a_1^{t1} - a_1^{t2} - x^{t12}\right)^2 + \left(b_1^{t1} - b_1^{t2} - y^{t12}\right)^2}$$, and the offset direction in which the base station 22 deviates from the corresponding installation position is $\varphi$ north of east after the difference between the differential displacement and the sensor displacement exceeds the displacement difference threshold, where

$$\Delta^{t12} = \left[\left(a_1^{t1}, b_1^{t1}\right) - \left(a_1^{t2}, b_1^{t2}\right)\right] \quad , \quad \Delta_{xy}^{t12} = \left(x^{t12}, y^{t12}\right) \quad , \quad \text{and}$$

$$\varphi = \arctan\left[\left(a_1^{t1} - a_1^{t2} - x^{t12}\right)/\left(b_1^{t1} - b_1^{t2} - y^{t12}\right)\right].$$

As similarly described above, in some examples, the working system 200 of a self-moving device further includes an alarm apparatus such as an indicator light and a buzzer. The alarm apparatus 160 may be assembled in the self-moving device or the base station, and after detecting the offset of the base station 22, the controller 160 of the self-moving device 12 may invoke the alarm apparatus 160 to send the base station offset alarm.

In some examples, the working system 200 of a self-moving device further includes an external device 40, and after detecting the offset of the base station 22, the controller 130 of the self-moving device 12 may invoke the transceiver apparatus 140 to send the base station offset alarm to the external device 40. In some examples, when the self-moving device 12 sends the base station offset alarm to the external device 40, information such as one or more of a serial number of the base station 22, the offset distance of the base station 22, and the offset direction of the base station 22 may further be carried so that the user is notified to adjust the position of the base station 22 and restore the base station 22 to the installation position in time. In other examples, the base station 22 may send the base station offset alarm to the external device 40.

Another working system of a self-moving device is specifically described below. Similar to FIG. 10, the working system of a self-moving device also includes at least one self-moving device and at least one base station. The following description is made still from a perspective of detection of offset of one base station by one self-moving device.

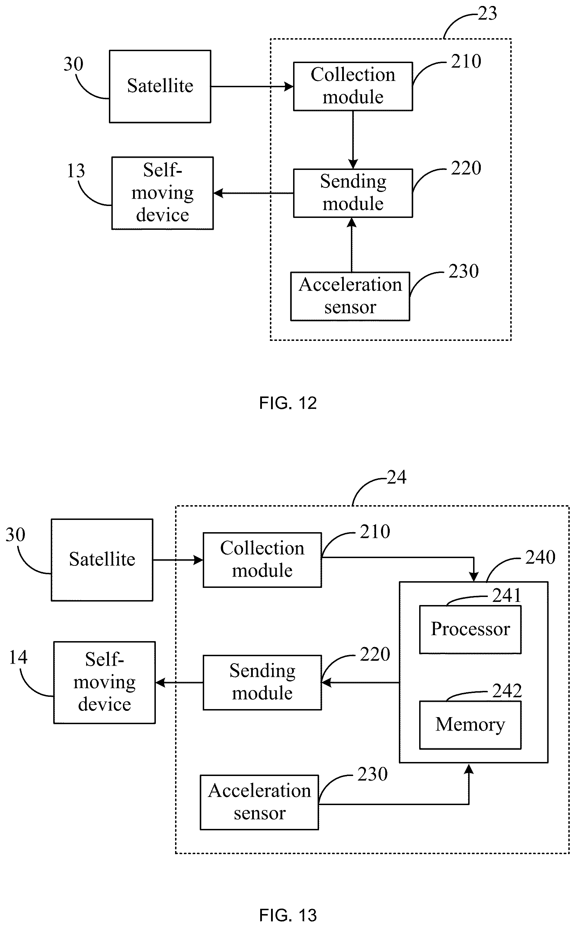

Referring to FIG. 12, a base station 23 may also include an acceleration sensor 230 in addition to a collection module 210 and a sending module 220. The acceleration sensor 230 is configured to monitor acceleration of the base station 23 and transmit monitored acceleration data to the self-moving device. In some examples, the acceleration sensor 230 in the base station 23 may be a single-axis accelerometer or a three-axis accelerometer.

After receiving the acceleration data transmitted by the base station 23, the controller 130 of the self-moving device 10 may detect offset status of the base station 23 from its initial installation position based on the acceleration data and selectively send the base station offset alarm based on the offset status of the base station. Multiple optional implementations are available for the detection of the offset status of the base station based on the acceleration data. In some examples, after receiving the acceleration data, the controller 130 of the self-moving device 10 may determine whether a variance of the acceleration data within a preset duration exceeds a preset acceleration variance threshold, and in a case where the variance of the acceleration data within the preset duration exceeds the preset acceleration variance threshold, the base station offset alarm is sent.

In some examples, after detecting the offset of the base station 23, the self-moving device 10 may also determine an offset distance and an offset direction between the base station 23 and the corresponding installation position based on the acceleration data.

As similarly described above, in some examples, the working system of a self-moving device further includes an alarm apparatus such as an indicator light and a buzzer. The alarm apparatus 160 may be assembled in the self-moving device 10 or the base station 23, and after detecting the offset of the base station 23, the controller 130 of the self-moving device 10 may invoke the alarm apparatus 160 to send the base station offset alarm.

In some examples, the working system of a self-moving device further includes the external device 40, and after detecting the offset of the base station 23, the controller 130 of the self-moving device 10 may invoke the transceiver apparatus 140 to send the base station offset alarm to the external device 40. In some examples, when the self-moving device 10 sends the base station offset alarm to the external device 40, the information such as the one or more of the serial number of the base station 23, the offset distance of the base station 23, and the offset direction of the base station 23 may further be carried so that the user is notified to adjust the position of the base station 23 and restore the base station 23 to the installation position in time. In other examples, the base station 23 may send the base station offset alarm to the external device 40.

Another working system of a self-moving device is specifically described below. Similar to FIG. 10, the working system of a self-moving device also includes at least one self-moving device and at least one base station. The following description is made still from a perspective of detection of offset of one base station by one self-moving device.

In the working system of a self-moving device, a base station 24 may autonomously detect its offset. Referring to FIG. 13, the base station 24 further includes a controller 240 in addition to a collection module 210, a sending module 220, and an acceleration sensor 230. The acceleration sensor 230 monitors acceleration of the base station 24 and transmits monitored acceleration data to the controller 240 of the base station 24. After receiving the preceding acceleration data, the controller 240 of the base station 24 may detect offset status of the base station 24 from its initial installation position based on the acceleration data and selectively invoke, based on the offset status of the base station, the sending module 220 to send a base station offset alarm to the self-moving device 10 in the working system. In some examples, an alarm apparatus in the working system may be assembled in the base station 24, and after detecting the offset of the base station 24, the controller 240 of the base station 24 may directly invoke the alarm apparatus to send the base station offset alarm.

In some examples, the controller 240 of the base station 24 may determine whether a variance of the preceding acceleration data within a preset duration exceeds a preset acceleration variance threshold, and in a case where the variance of the preceding acceleration data within the preset duration exceeds the preset acceleration variance threshold, it is determined that the base station 24 deviates from the corresponding installation position. In other examples, after detecting the offset of the base station, the controller 240 of the base station 24 may also determine an offset distance and an offset direction between the base station 24 and its corresponding installation position based on the acceleration data. For other content related to the alarm apparatus and an external device, reference may be made to the preceding description. The details are not repeated.

The present application has the following benefits: the offset of the base station is detected in multiple various scenarios, and the errors in the positioning and navigation of the self-moving device within the working system of a self-moving device caused by the offset of the base station are effectively avoided, thereby improving the working precision and efficiency of the self-moving device.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A working system of a self-moving device, comprising:

   the self-moving device configured to autonomously travel and perform a work task;
   a first base station, wherein the first base station is configured to acquire first satellite observation data, parse the first satellite observation data to generate first differential data, and transmit the first differential data to the self-moving device; and
   a second base station, wherein the second base station is configured to acquire second satellite observation data, parse the second satellite observation data to generate second differential data, and transmit the second differential data to the self-moving device;
   wherein the self-moving device is further configured to receive the first differential data from the first base station and the second differential data from the second base station and calculate a difference parameter according to the first differential data and the second differential data, and in a case where the difference parameter meets a corresponding base station offset condition, it is determined that the first base station and/or the second base station deviates from a corresponding initial installation position, and a base station offset alarm is sent.

2. The working system according to claim 1, wherein the difference parameter comprises a coordinate difference, and the self-moving device calculates a first differential positioning coordinate of the self-moving device according to the first differential data, calculates a second differential positioning coordinate of the self-moving device according to the corresponding second differential data, and then determines the coordinate difference from the first differential positioning coordinate and the second differential positioning coordinate.

3. The working system according to claim 2, wherein the self-moving device determines a corresponding first coordinate difference from a first differential positioning coordinate and a second differential positioning coordinate that are calculated at a first moment and determines a corresponding second coordinate difference from a first differential positioning coordinate and a second differential positioning coordinate that are calculated at a second moment, and in a case where a difference between the first coordinate difference and the second coordinate difference exceeds a coordinate difference threshold, it is determined that the first base station and/or the second base station deviates from the installation position.

4. The working system according to claim 1, wherein the difference parameter comprises a heading, and the self-moving device calculates a first differential positioning coordinate of the self-moving device according to the first differential data, calculates a second differential positioning coordinate of the self-moving device according to the corresponding second differential data, and then determines the heading from the first differential positioning coordinate and the second differential positioning coordinate.

5. The working system according to claim 4, wherein the self-moving device determines a corresponding first heading from a first differential positioning coordinate and a second differential positioning coordinate that are calculated at a first moment and determines a corresponding second heading from a first differential positioning coordinate and a second differential positioning coordinate that are calculated at a second moment, and in a case where a difference between the first heading and the second heading exceeds a heading difference threshold, it is determined that the first base station and/or the second base station deviates from the installation position.

6. The working system according to claim 3, wherein the self-moving device comprises an odometer and an inertial sensor, after determining that the first base station and/or the second base station deviates from the installation position, the self-moving device determines, according to first differential positioning coordinates at a third moment and a fourth moment, a first differential displacement corresponding to the first base station and determines, according to second differential positioning coordinates at the third moment and the fourth moment, a second differential displacement corresponding to the second base station, and a sensor displacement within a period from the third moment to the fourth moment is calculated by fusing mileage data from the odometer and inertial data from the inertial sensor, wherein in a case where a difference between the first differential displacement and the sensor displacement exceeds a displacement difference threshold, it is determined that the first base station deviates from the installation position, and in a case where a difference between the second differential displacement and the sensor displacement exceeds the displacement difference threshold, it is determined that the second base station deviates from the installation position.

7. The working system according to claim 6, wherein after determining that the first base station deviates from the installation position, the self-moving device determines an offset distance of the first base station and an offset direction of the first base station according to the difference between the first differential displacement and the sensor displacement.

8. The working system according to claim 3, wherein the first moment is an initial moment when the self-moving device is powered on and started, and the second moment is a moment during working of the self-moving device, wherein in a case where the self-moving device comprises a single station, the second moment is a static moment during the working of the self-moving device.

9. The working system according to claim 1, wherein the self-moving device comprises a single station, and the self-moving device uses, in a static state, the single station to receive the first differential data from the first base station and the second differential data from the second base station in turn.

10. The working system according to claim 9, wherein the self-moving device comprises one or more of a traveling wheel, a vision sensor, and an inertial sensor, wherein in a case where one or more of the following are met: the traveling wheel is static, a picture currently collected by the vision sensor is static, a variance of inertial data of the inertial sensor within a preset duration does not exceed an inertial variance threshold, and a variance of satellite positioning data within a preset duration does not exceed a positioning variance threshold, the self-moving device determines that the self-moving device is in the static state.

11. The working system according to claim 1, wherein the self-moving device comprises two stations, and the self-moving device uses, in a static state or a motion state, the two stations to simultaneously receive the first differential data from the first base station and the second differential data from the second base station, respectively.

12. The working system according to claim 1, wherein the base station offset condition is met in a case where an offset distance between the first base station or the second base station and the corresponding installation position exceeds 10 cm.

13. The working system according to claim 1, wherein the first base station comprises an acceleration sensor, the acceleration sensor monitors acceleration of the first base station, and the first base station and/or the self-moving device detects, according to acceleration data monitored by the acceleration sensor, whether the first base station deviates from the installation position.

14. The working system according to claim 1, further comprising an alarm apparatus, wherein the self-moving device uses the alarm apparatus to give an alarm when the first base station and/or the second base station deviates from the installation position, and the alarm apparatus is an indicator light or a buzzer.

15. The working system according to claim 1, further comprising an external device, wherein the self-moving device sends a base station offset alarm to the external device when the first base station and/or the second base station deviates from the installation position, so as to cause the external device to give an alarm visually according to the base station offset alarm.

16. A base station, comprising:

a collection module configured to acquire satellite observation data at a current observation position; and
a sending module configured to send data to a self-moving device;
wherein the base station further comprises an acceleration sensor and a controller, the acceleration sensor is configured to monitor acceleration of the base station, and the controller is configured to detect offset status of the base station from an initial installation position according to acceleration data monitored by the acceleration sensor and selectively send a base station offset alarm to the self-moving device through the sending module according to the offset status.

17. The base station according to claim 16, wherein the controller sends the base station offset alarm in a case where a variance of the acceleration data within a preset duration exceeds an acceleration variance threshold.

18. A working system of a self-moving device, comprising:

the self-moving device configured to autonomously travel and perform a work task;
wherein the self-moving device comprises a controller, a sensor assembly, and a differential positioning apparatus; and
a base station, wherein the base station is configured to acquire satellite observation data, parse the satellite observation data to generate differential data, and transmit the differential data to the self-moving device;
wherein in a process where the self-moving device moves, the controller is configured to calculate a differential displacement of the self-moving device within a preset duration according to an output of the differential positioning apparatus, calculate a sensor displacement of the self-moving device within the preset duration according to an output of the sensor assembly, and send a base station offset alarm in a case where a difference between the differential displacement and the sensor displacement is greater than a displacement difference threshold.

19. The working system according to claim 18, wherein the sensor assembly comprises an odometer, and the controller calculates the sensor displacement according to mileage data from the odometer.

20. The working system according to claim 18, wherein the controller calculates an offset distance of the base station and/or an offset direction of the base station according to the difference between the differential displacement and the sensor displacement and transmits the offset distance of the base station and/or the offset direction of the base station when sending the base station offset alarm.

FIG. 1

FIG. 2

FIG. 3

FIG. 4

FIG. 5

FIG. 6

```
                                                                    ┌─710
┌─────────────────────────────────────────────────────────────┐
│ Calculate a first differential positioning coordinate of a self-moving │
│  device and a second differential positioning coordinate of the self-  │
│    moving device that correspond to a first moment from first          │
│   differential data and second differential data received at the first │
│                    moment, respectively                                │
└─────────────────────────────────────────────────────────────┘
                              │
                              ▼                                     ┌─720
┌─────────────────────────────────────────────────────────────┐
│ Calculate, based on the first differential positioning coordinate and  │
│ the second differential positioning coordinate that correspond to the  │
│  first moment, a first coordinate difference corresponding to the first │
│                           moment                                       │
└─────────────────────────────────────────────────────────────┘
                              │
                              ▼                                     ┌─730
┌─────────────────────────────────────────────────────────────┐
│    Calculate a first differential positioning coordinate of the self-  │
│  moving device and a second differential positioning coordinate of     │
│   the self-moving device that correspond to a second moment from       │
│    first differential data and second differential data received at the │
│                    second moment, respectively                         │
└─────────────────────────────────────────────────────────────┘
                              │
                              ▼                                     ┌─740
┌─────────────────────────────────────────────────────────────┐
│ Calculate, based on the first differential positioning coordinate and  │
│  the second differential positioning coordinate that correspond to the │
│ second moment, a second coordinate difference corresponding to the     │
│                        second moment                                   │
└─────────────────────────────────────────────────────────────┘
                              │
                              ▼                                     ┌─750
┌─────────────────────────────────────────────────────────────┐
│    Determine whether a difference between the second coordinate         │
│    difference corresponding to the second moment and the first         │
│  coordinate difference corresponding to the first moment exceeds a      │
│   preset coordinate difference threshold, and in a case where the       │
│ difference between the second coordinate difference corresponding       │
│    to the second moment and the first coordinate difference            │
│   corresponding to the first moment exceeds the preset coordinate       │
│ difference threshold, determine that a base station deviates from an    │
│                    installation position                               │
└─────────────────────────────────────────────────────────────┘
```

FIG. 7A

```
┌──────────────────┐
│      Start       │
└──────────────────┘
          │
          ▼
┌──────────────────────┐
│ Power on a mower and │
│    base stations     │
└──────────────────────┘
          │
          ▼
    ╱────────────╲
   ╱   Whether    ╲      Yes
  ╱ the mower is static ╲──────────┐
   ╲   currently?    ╱             │
    ╲────────────╱                 │
          │ No                     │
          ▼                        ▼
   ┌──────────┐      ┌─────────────────────────┐
   │   Wait   │      │ Receive information from │
   └──────────┘      │ a base station 21a to   │
                     │ calculate a current      │
                     │ position (a1, b1) of the │
                     │ mower                    │
                     └─────────────────────────┘
                                │
                                ▼
                     ┌─────────────────────────┐
                     │ Receive information from │
                     │ a base station 21b to   │
                     │ calculate a current      │
                     │ position (a2, b2) of the │
                     │ mower                    │
                     └─────────────────────────┘
                                │
                                ▼
                     ┌─────────────────────────┐
                     │ Calculate a difference T,│
                     │ where T = (a2 − a1, b2 − b1)│
                     └─────────────────────────┘
```

Calculate a difference T, where $T = (a2 - a1, b2 - b1)$

Whether the mower is static currently?

Receive information from the base station 21a to calculate a current position (a3, b3) of the mower

Receive information from the base station 21b to calculate a current position (a4, b4) of the mower

Calculate a difference T1, where $T1 = (a4 - a3, b4 - b3)$

Whether T1 is outside a range of $T \pm \varepsilon1$?

Give a base station offset alarm

End

FIG. 7B

24

```
┌─────────────────────────────────────────────────────────┐  ⟋─810
│ Calculate a first differential positioning coordinate of│
│ a self-moving device 11 and a second differential       │
│ positioning coordinate of the self-moving device 11     │
│ that correspond to a first moment from first            │
│ differential data and second differential data received │
│ at the first moment, respectively                       │
└─────────────────────────────────────────────────────────┘
                            │
                            ▼                                   ⟋─820
┌─────────────────────────────────────────────────────────┐
│ Calculate, based on the first differential positioning  │
│ coordinate and the second differential positioning      │
│ coordinate that correspond to the first moment, a first │
│ heading corresponding to the first moment               │
└─────────────────────────────────────────────────────────┘
                            │
                            ▼                                   ⟋─830
┌─────────────────────────────────────────────────────────┐
│ Calculate a first differential positioning coordinate of│
│ the self-moving device 11 and a second differential     │
│ positioning coordinate of the self-moving device 11     │
│ that correspond to a second moment from first           │
│ differential data and second differential data received │
│ at the second moment, respectively                      │
└─────────────────────────────────────────────────────────┘
                            │
                            ▼                                   ⟋─840
┌─────────────────────────────────────────────────────────┐
│ Calculate, based on the first differential positioning  │
│ coordinate and the second differential positioning      │
│ coordinate that correspond to the second moment, a      │
│ second heading corresponding to the second moment       │
└─────────────────────────────────────────────────────────┘
                            │
                            ▼                                   ⟋─850
┌─────────────────────────────────────────────────────────┐
│ Determine whether a difference between the second       │
│ heading corresponding to the second moment and the      │
│ first heading corresponding to the first moment exceeds │
│ a preset heading difference threshold, and in a case    │
│ where the difference between the second heading         │
│ corresponding to the second moment and the first        │
│ heading corresponding to the first moment exceeds the   │
│ preset heading difference threshold, determine that a   │
│ base station 21 deviates from an installation position  │
└─────────────────────────────────────────────────────────┘
```

FIG. 8A

```
                    ┌─────────────┐
                    │    Start    │
                    └──────┬──────┘
                           │
              ┌────────────▼────────────┐
              │  Power on a mower and   │
              │      base stations      │
              └────────────┬────────────┘
                           │
                  ╱────────▼────────╲
    ┌────────────▏    Whether        ▕──── Yes
    │            ▏ the mower is static ▕
    │            ╲    currently?      ╱
    │                  ╲──┬──╱
    │                     │ No
    │              ┌──────▼──────┐
    │              │    Wait     │
    └──────────────┤             │
                   └─────────────┘
```

Receive information from a base station 21a to calculate a current position (a1, b1) of the mower

Receive information from a base station 21b to calculate a current position (a2, b2) of the mower

Calculate a difference $\theta_1$, where $\theta_1 = \arctan((a2 - a1)/(b2 - b1))$

Whether the mower is static currently? — Yes / No

Wait

Receive information from the base station 21a to calculate a current position (a3, b3) of the mower

Receive information from the base station 21b to calculate a current position (a4, b4) of the mower

Calculate a difference $\theta$, where $\theta = \arctan((a4 - a3)/(b4 - b3))$

Whether $\theta_1$ is outside a range of $\theta \pm \varepsilon_2$? — No / Yes

Give a base station offset alarm

End

FIG. 8B

910

Calculate first differential positioning coordinates of a self-moving device from first differential data received at a third moment and a fourth moment, respectively, and thus, determine a first differential displacement corresponding to a first base station

920

Calculate second differential positioning coordinates of the self-moving device from second differential data received at the third moment and the fourth moment, respectively, and thus, determine a second differential displacement corresponding to a second base station

930

Calculate a sensor displacement of the self-moving device by fusing inertial data from an inertial sensor and mileage data from an odometer

940

Determine whether a difference between the first differential displacement corresponding to the first base station and the sensor displacement exceeds a preset first displacement difference threshold, and in a case where the difference exceeds the preset first displacement difference threshold, determine that the first base station deviates from a first installation position

950

Determine whether a difference between the second differential displacement corresponding to the second base station and the sensor displacement exceeds a preset second displacement difference threshold, and in a case where the difference exceeds the preset second displacement difference threshold, determine that the second base station deviates from a second installation position

FIG. 9A

FIG. 9B

FIG. 10

FIG. 11

30 — Satellite → Collection module — 210

13 — Self-moving device ← Sending module — 220

23

Acceleration sensor — 230

FIG. 12

30 — Satellite → Collection module — 210

24

240

Processor — 241

14 — Self-moving device ← Sending module — 220

Memory — 242

Acceleration sensor — 230

FIG. 13

## INTERNATIONAL SEARCH REPORT

International application No.

**PCT/CN2024/120516**

### A. CLASSIFICATION OF SUBJECT MATTER

G01S 19/07(2010.01)i

According to International Patent Classification (IPC) or to both national classification and IPC

### B. FIELDS SEARCHED

Minimum documentation searched (classification system followed by classification symbols)

IPC:G01S,G05D

Documentation searched other than minimum documentation to the extent that such documents are included in the fields searched

Electronic data base consulted during the international search (name of data base and, where practicable, search terms used)

CNTXT, ENTXT, ENTXTC, VEN, ISI WEB OF SEIENCE, CNKI: 变化, 差, 第二, 基站, 偏移, 位置, 移动, 阈值, basestation, base station, bias, BS, position, second, threshold, chang+, mov+, differ+

### C. DOCUMENTS CONSIDERED TO BE RELEVANT

| Category* | Citation of document, with indication, where appropriate, of the relevant passages | Relevant to claim No. |
|---|---|---|
| A | CN 105008956 A (NEC CORP.) 28 October 2015 (2015-10-28) description, paragraphs 26 and 43-153 | 1-15 |
| X | CN 116379982 A (SHENZHEN ECOFLOW INNOVATION TECHNOLOGY CO., LTD.) 04 July 2023 (2023-07-04) description, paragraphs 3-13 and 29-47, and figure 1 | 16-17 |
| X | CN 113359695 A (POSITEC POWER TOOLS (SUZHOU) CO., LTD.) 07 September 2021 (2021-09-07) description, paragraphs 11-12 and 22-82 | 18-20 |
| X | WO 2018030154 A1 (YANMAR CO., LTD.) 15 February 2018 (2018-02-15) description, paragraphs 37-39, and figure 2 | 16-17 |
| X | CN 108226859 A (POSITEC POWER TOOLS (SUZIIOU) CO., LTD.) 29 June 2018 (2018-06-29) description, paragraphs 209-210 | 16-17 |
| A | CN 110794435 A (XAG CO., LTD.) 14 February 2020 (2020-02-14) entire document | 1-20 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 January 2025** | **06 January 2025** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/120516** |

**Box No. III     Observations where unity of invention is lacking (Continuation of item 3 of first sheet)**

This International Searching Authority found multiple inventions in this international application, as follows:

Claims 1, 16 and 18 are three inventions. Claim 1 relates to determining whether a base stations deviates by means of a difference parameter of first and second differential data of two base stations, specifically, special technical features of claim 1 are: "a first base station configured to acquire first satellite observation data, parse and generate first differential data on the basis of the first satellite observation data, and transmit the first differential data to the self-mobile device; and a second base station configured to acquire second satellite observation data, parse and generate second differential data on the basis of the second satellite observation data, and transmit the second differential data to the self-mobile device, wherein the self-mobile device is further configured to receive the first differential data from the first base station and the second differential data from the second base station, calculate a difference parameter on the basis of the first differential data and the second differential data, and, if the difference parameter meets a corresponding base station deviation condition, determine that the first base station and/or the second base station deviate(s) from a corresponding initial mounting position". Claim 16 relates to detecting, by means of an acceleration sensor on a base station, whether the base station deviates, specifically, special technical features of claim 16 are "the base station further comprises an acceleration sensor and a controller, wherein the acceleration sensor is configured to monitor the acceleration of the base station, and the controller is configured to detect an deviation condition between the base station and an initial mounting position on the basis of acceleration data obtained by means of monitoring by the acceleration sensor". Claim 18 relates to determining whether a base station deviates by means of the difference between a differential displacement of a self-mobile device within a preset duration and a displacement of a sensor, specifically, special technical features of claim 18 are: "during the movement of a self-mobile device, the controller is configured to calculate, on the basis of the output of the differential positioning device, a differential displacement of the self-mobile device within a preset duration, calculate, on the basis of the output of the sensor assembly, a sensor displacement of the self-mobile device within the preset duration, and, when the difference between the differential displacement and the sensor displacement is greater than a displacement difference threshold, send a base station deviation alarm". Although the three claims all relate to determining whether a base station deviates, the special technical features thereof are different, that is, the inventive concepts of determining whether the base station deviates are different.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**     ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

## INTERNATIONAL SEARCH REPORT
### Information on patent family members

International application No.

**PCT/CN2024/120516**

| Patent document cited in search report | | | Publication date (day/month/year) | Patent family member(s) | | | Publication date (day/month/year) |
|---|---|---|---|---|---|---|---|
| CN | 105008956 | A | 28 October 2015 | JPWO | 2014132618 | A1 | 02 February 2017 |
| | | | | JP | 6119838 | B2 | 26 April 2017 |
| | | | | WO | 2014132618 | A1 | 04 September 2014 |
| | | | | US | 2015362596 | A1 | 17 December 2015 |
| CN | 116379982 | A | 04 July 2023 | None | | | |
| CN | 113359695 | A | 07 September 2021 | None | | | |
| WO | 2018030154 | A1 | 15 February 2018 | JP | 2018025924 | A | 15 February 2018 |
| CN | 108226859 | A | 29 June 2018 | EP | 3561627 | A1 | 30 October 2019 |
| | | | | EP | 3561627 | A4 | 22 July 2020 |
| | | | | US | 2019369640 | A1 | 05 December 2019 |
| | | | | US | 11442448 | B2 | 13 September 2022 |
| | | | | WO | 2018108179 | A1 | 21 June 2018 |
| | | | | WO | 2018108180 | A1 | 21 June 2018 |
| | | | | EP | 3557355 | A1 | 23 October 2019 |
| | | | | EP | 3557355 | A4 | 22 July 2020 |
| | | | | EP | 3557355 | B1 | 12 July 2023 |
| | | | | US | 2019346848 | A1 | 14 November 2019 |
| | | | | EP | 4276645 | A2 | 15 November 2023 |
| | | | | EP | 4276645 | A3 | 10 January 2024 |
| CN | 110794435 | A | 14 February 2020 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202311254798